# EUROPÄISCHE PATENTSCHRIFT

(11) **EP 0 531 318 B1**
(45) Veröffentlichungstag und Bekanntmachung des Hinweises auf die Patenterteilung: **17.08.1994**
(21) Anmeldenummer: 91909054.8
(22) Anmeldetag: 08.05.1991
(51) Int. Cl.: F16K 11/074

(54) **SANITÄRARMATUR MIT SCHWENKBAREM AUSLAUFARM**
SANITARY FITTING WITH SWIVELLING OUTLET ARM
RACCORD A BRAS DE DECHARGE PIVOTANT POUR INSTALLATION SANITAIRE

(30) Priorität: 30.05.1990 DE 4017328
(43) Veröffentlichungstag der Anmeldung: 17.03.1993
(73) Patentinhaber: IDEAL-STANDARD GMBH, D-53008 Bonn (DE)
(72) Erfinder: BECKER, Albert, D-5560 Wittlich 12 (DE)
(74) Vertreter: Gesthuysen, Hans Dieter, Dipl.-Ing.
(86) Internationale Anmeldenummer: EP9100869
(87) Internationale Veröffentlichungsnummer: WO9119125

(56) Entgegenhaltungen:
- EP-A- 0 221 245
- DE-A- 3 531 935

## Beschreibung

Die Erfindung betrifft eine Sanitärarmatur mit einem ortsfest anbringbaren, zylindrischen Armaturenkörper mit Zu- und Ablaufkanälen und einem Ausströmkanal, mit einer auf den Armaturenkörper aufgeschobenen, zylindrischen Armaturenhülse mit seitlich angeschlossenem Schwenkarm mit Auslaufmundstück, mit einer auf dem Armaturenkörper angebrachten Ventileinheit und mit einer die Ventileinheit überfassenden, an die Armaturenhülse anschließenden Kappe, wobei zwischen dem Armaturenkörper und der Armaturenhülse einerseits Dichtringe im Bereich des Ausströmkanals, andererseits ein unterer und ein oberer Lagerring angeordnet sind, wobei die Lagerringe vorzugsweise aus Kunststoff, insbesondere aus einem gleitfähigen, verschleißarmen Kunststoff bestehen und wobei der untere Lagerring im Querschnitt L-förmig mit einem zylindermantelföfmigen, ein Radiallager bildenden Abschnitt und einem flanschartig abragenden, ein Axiallager bildenden Abschnitt ausgeführt ist und der obere Lagerring ebenfalls einen zylindermantelförmigen, ein Radiallager bildenden Abschnitt aufweist.

Sanitärarmaturen der in Rede stehenden Art werden insbesondere im Küchenbereich gern eingesetzt, und zwar insbesondere in Form von Einhebel-Einloch-Küchenbatterien. Bei der bekannten Sanitärarmatur, von der die Erfindung ausgeht (vgl. die Einbau- und Betriebsanleitung der Sanitärarmatur "Eurodisc 33 891" der Firma Friedrich Grohe Armaturenfabrik GmbH + Co., 8.87), ist die Kappe mit der Ventileinheit verschraubt. Im übrigen befinden sich zwischen dem in der Spüle verschraubten Armaturenkörper und der Armaturenhülse zwei umlaufende Lippendichtringe oberhalb und unterhalb des in der Armaturenhülse umlaufenden Ausströmkanals. Auf dem Armaturenkörper durch Befestigungsschrauben fest angebracht ist die Ventileinheit in Form einer Kompaktkartusche. Sie ist mit Hilfe von zwei Befestigungsschrauben mit dem Armaturenkörper verschraubt. Zwischen der Kompaktkartusche und dem Armaturenkörper befindet sich der obere Lagerring, der einerseits mit einem radial nach außen abragenden Flansch zwischen Kartusche und Armaturenkörper eingeklemmt ist, andererseits mit einem zylindermantelförmigen Abschnitt als Radiallager für die Armaturenhülse dient. Der untere Lagerring mit L-förmigem Querschnitt liegt auf einem unteren Ringflansch des Armaturenkörpers mit seinem flanschartigen Abschnitt auf und ragt von dort mit seinem zylindermantelförmigen Abschnitt zwischen Armaturenkörper und Armaturenhülse, so daß sich hier sowohl ein Axiallager als auch ein Radiallager für die Armaturenhülse bildet. Hier ist der zylindermantelförmige Abschnitt mit einer Mehrzahl von radial verlaufenden, relativ breiten Schlitzen versehen, der zylindermantelförmige Abschnitt wird also gewissermaßen von einer Mehrzahl einzelner Federzungen gebildet. Damit kann der untere Lagerring in der Armaturenhülse verspannt werden. Der untere Lagerring wird von dem durchgehend umlaufenden flanschartigen Abschnitt zusammengehalten.

Der Erfindung liegt nun die Aufgabe zugrunde, die bekannte, zuvor erläuterte Sanitärarmatur konstruktiv zu verbessern.

Die zuvor aufgezeigte Aufgabe ist dadurch gelöst, daß der obere Lagerring im zylindermantelförmigen Abschnitt durchgehend ausgeführt ist und mit einem Überstandsabschnitt nach oben über die Armaturenhülse hinausragt und der Überstandsabschnitt radial abragende Rastnasen zum Aufrasten der Kappe aufweist. Bei der erfindungsgemäßen Sanitärarmatur hat der obere Lagerring nicht nur die Funktion der radialen Lagerung der Armaturenhülse auf dem Armaturenkörper. Vielmehr dient der obere Lagerring zusätzlich der Befestigung der Kappe, die nicht, wie im Stand der Technik, aufgeschraubt werden muß, sondern einfach aufgerastet werden kann.

Es gibt nun verschiedene Möglichkeiten, die Lehre der vorliegenden Erfindung auszugestalten und weiterzubilden. Dazu wird zunächst auf die dem Patentanspruch 1 nachgeordneten Patentansprüche verwiesen. Im übrigen wird die Erfindung in den verschiedenen Ausgestaltungsmöglichkeiten in Verbindung mit der Erläuterung eines bevorzugten Ausführungsbeispiels der Erfindung anhand der Zeichnung noch näher erläutert. In der Zeichnung zeigt
- Fig. 1: in einer Seitenansicht, zum Teil aufgeschnitten, ein bevorzugtes Ausführungsbeispiel einer erfindungsgemäßen Sanitärarmatur,
- Fig. 2: im Querschnitt einen oberen Lagerring einer Sanitärarmatur gemäß Fig. 1,
- Fig. 3: den oberen Lagerring aus Fig. 2 in einer Draufsicht,
- Fig. 4: im Querschnitt einen unteren Lagerring für eine Sanitärarmatur gemäß Fig. 1 und
- Fig. 5: den unteren Lagerring aus Fig. 4 in einer Draufsicht.

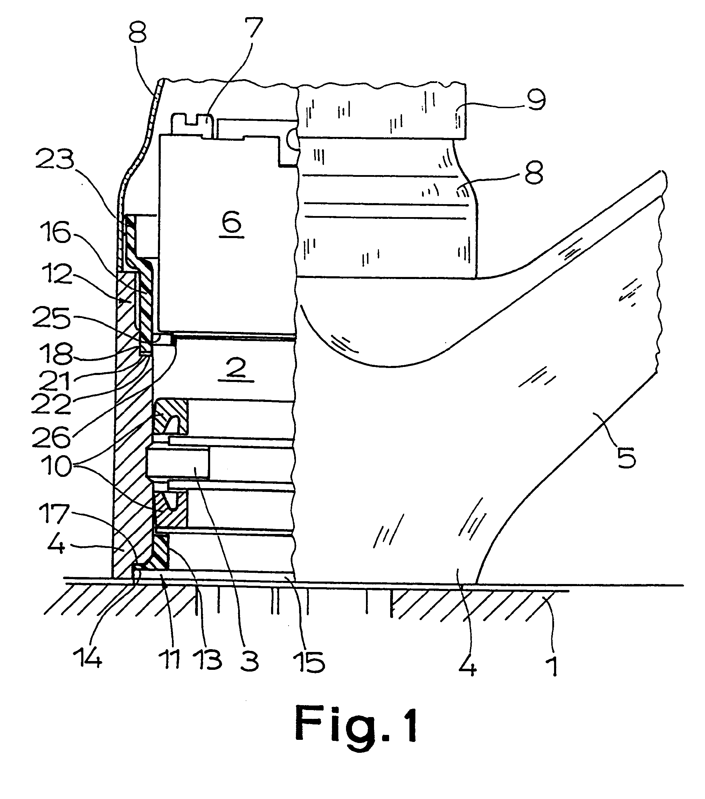

Fig. 1 zeigt, links im Schnitt, rechts in einer Ansicht, eine Sanitärarmatur wie sie insbesondere als Einhebel-Einloch-Küchenbatterie eingesetzt wird. Diese Sanitärarmatur ist, wie angedeutet, auf einer Spültischplatte 1 angebracht. Ortsfest angebracht ist dabei ein zylindrischer Armaturenkörper 2 der Sanitärarmatur, der wie üblich Zu- und Ablaufkanäle, die nicht dargestellt sind, sowie einen eingestochenen Ausströmkanal 3 aufweist. Auf den Armaturenkörper 2 aufgeschoben ist eine zylindrische Armaturenhülse 4 mit seitlich angeschlossenem Schwenkarm 5. Der Schwenkarm 5 trägt ein hier nicht dargestelltes Auslaufmundstück. Die Armaturenhülse 4 ist gegenüber dem Armaturenkörper 2 um die gemeinsame Längsachse drehbar, so daß der Schwenkarm 5 von einer zur anderen Seite geschwenkt werden kann.

Bei der dargestellten Sanitärarmatur handelt es sich, wie erläutert, um eine Einhebel-Einloch-Küchenbatterie mit einer Kompaktkartusche als Ventileinheit 6. Die Ventileinheit 6 ist auf dem Armaturenkörper 2 angebracht, und zwar mit Hilfe von Befestigungsschrauben 7, die sich in Längsrichtung durch die Ventileinheit 6 hindurch in Gewindebohrungen im Armaturenkörper 2 erstrecken. Eine dieser Befestigungsschrauben 7 ist in Fig. 1 zu erkennen. Die Ventileinheit 6 wird von einer an die Armaturenhülse 4 anschließenden Kappe 8 überfaßt, die ihrerseits von einer mit einem nicht dargestellten Bedienungshebel gemeinsam bewegten Rosette 9 überfaßt wird.

Zwischen dem Armaturenkörper 2 und der Armaturenhülse 4 befinden sich im Bereich des Ausströmkanals 3 zwei Dichtringe 10. Im übrigen sind zwischen dem Armaturenkörper 2 und der Armaturenhülse 4 ein unterer Lagerring 11 und ein oberer Lagerring 12 angeordnet. Die Lagerringe 11, 12 bestehen im dargestellten Ausführungsbeispiel, wie auch im Stand der Technik, aus einem besonders gleitfähigen und verschleißarmen Kunststoff. Der untere Lagerring 11 ist im Querschnitt L-förmig ausgeführt mit einem zylindermantelförmigen, ein Radiallager bildenden Abschnitt 13 und einem flanschartig abragenden, ein Axiallager bildenden Abschnitt 14. Dargestellt ist auch noch ein Basisring 15, der ein gesondertes Teil sein kann, aber auch als umlaufender Außenflansch am feststehenden Armaturenkörper 2 ausgebildet sein kann. Der Basisring 15 stützt jedenfalls den das Axiallager bildenden Abschnitt 14 des unteren Lagerringes 11. Der obere Lagerring 12 weist ebenfalls einen zylindermantelförmigen, ein Radiallager bildenden Abschnitt 16 auf; er ist im zylindermantelförmigen Abschnitt 16 durchgehend ausgeführt. Die Armaturenhülse 4 ist mit zu den Lagerringen 11, 12 passenden umlaufenden Ausnehmungen 17, 18 versehen.

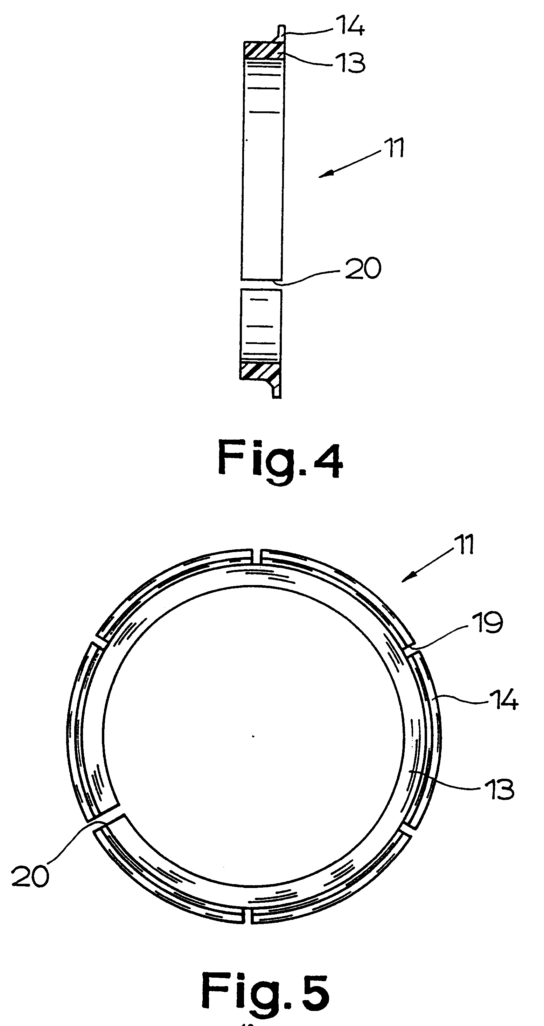

Anhand der Fig. 5 kann man im übrigen erkennen, daß der untere Lagerring 11 im flanschartig abragenden Abschnitt 14 auf dem Umfang verteilt mehrere radial verlaufende Schlitze 19 aufweist. Die Schlitze 19 verhindern Verwerfungen des flanschartigen Abschnittes 14, so daß er spannungsfrei als Axiallager für die Armaturenhülse 4 dienen kann und einem geringen Verschleiß ausgesetzt ist. Aus montagetechnischen Gründen ist im übrigen hier noch der untere Lagerring 11 mit einem einzigen durchgehenden, radial verlaufenden Einbauschlitz 20 versehen, so daß der untere Lagerring 11 einfach in die Ausnehmung 17 eingesetzt werden kann.

Hinsichtlich des oberen Lagerringes 12 zeigen die Fig. 1, 2 und 3 einige Besonderheiten.

Wesentlich ist zunächst, daß der obere Lagerring 12 mit einem Stirnrand 21 des zylindermantelförmigen Abschnittes 16 einer Ringfläche 22 an der Armaturenhülse 4 mit Spiel gegenübersteht. Dieses Spiel macht deutlich, daß eine Axialführung für die Armaturenhülse 4 durch den oberen Lagerring 12 nicht gegeben ist, so daß auch eine Einspannung des Lagerringes 12 in der Form, wie im Stand der Technik vorgesehen, nicht vorhanden ist. Auch dadurch wird der Verschleiß des Lagerringes 12 erheblich verringert.

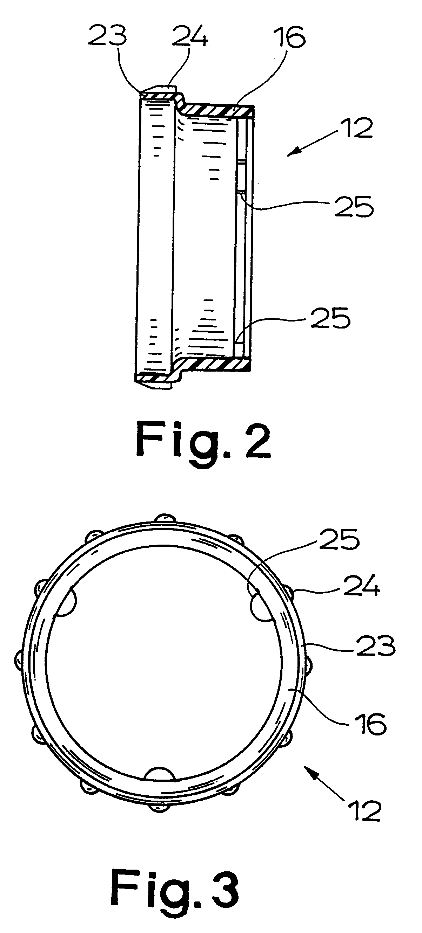

Es fällt auf, daß der obere Lagerring 12 keinen flanschartig abragenden, als Axiallager dienenden Abschnitt aufweist. Der obere Lagerring 12 wird nämlich außer zur radialen Lagerung der Armaturenhülse 4 auf dem Armaturenkörper 2 noch für eine weitere Funktion genutzt. Die Fig. 1 und 2 zeigen dazu, daß der obere Lagerring 12 mit einem Überstandsabschnitt 23 nach oben über die Armaturenhülse 14 hinausragt und in dem Überstandsbaschnitt 23 radial abragende Rastnasen 24 zum Aufrasten der Kappe 8 aufweist. Beim Stand der Technik wurde die Kappe 8 auf die Ventileinheit 6 aufgeschraubt, letztere war dazu mit einem Außengewinde versehen. Demgegenüber ist die Verbindung über Rastnasen 24 und entsprechende Rastausnehmungen in der Kappe 8 natürlich viel einfacher und kostengünstiger. Der obere Lagerring 12 bietet dabei erfindungsgemäß eine konstruktiv einfache Möglichkeit zur Anbringung der erforderlichen Rastnasen 24. Auch eine umgekehrte Zuordnung von Rastnasen 24 und Rastausnehmungen wäre natürlich möglich.

Fig. 1 zeigt, daß die Außenfläche der Sanitärarmatur glatt durchgeht und von den Außenflächen der Armaturenhülse 4 und der Kappe 8 gebildet ist. Eine zusätzliche Fixierung des oberen Lagerringes 12 und eine verbesserte Positionierung der Kappe 8 ergibt sich dann, wenn der obere Lagerring 12 am unteren Ende des überstandsabschnittes 23 einen radial nach außen abragenden Flansch aufweist, der zwischen Armaturenhülse 4 und Kappe 8 hindurchragt und dessen Außen rand mit den Außenflächen von Armaturenhülse 4 und Kappe 8 fluchtet. Dies ist in der Zeichnung aber nicht dargestellt.

Bislang ist noch nichts dazu ausgeführt worden, wie der obere Lagerring 12 bei der dargestellten Sanitärarmatur fixiert wird. Im Stand der Technik dienen dazu Ausnehmungen im umlaufenden, zylindermantelförmigen Abschnitt, die von den Befestigungsschrauben durchsetzt werden. Da der zylindermantelförmige Abschnitt 16 des Lagerrings 12 hier aber durchgehend ausgeführt ist, ist eine andere Lösung gefunden worden. Die Fig. 1 und 3 machen hier nun besonders deutlich, daß der zylindermantelförmige Abschnitt 16 des oberen Lagerringes 12 die Ventileinheit 6 umgibt und am Innenumfang nach innen abragende Lappen 25 aufweist und im Armaturenkörper 2 zu den Lappen 25 passende Ausnehmungen 26 vorgesehen sind. Durch die in die Ausnehmungen 26 eingreifenden Lappen 25, hier sind drei Lappen 25 vorgesehen, ist der Lagerring 12 gegenüber dem Armaturenkörper 2 drehgesichert; er kann sich also nicht mit der Armaturenhülse 4 mitdrehen. Gleichzeitig ist der Lagerring 12 in axialer Richtung fixiert und die Rastnasen 24 befinden sich in ihrer vorgeschriebenen Position, so daß die Kappe 8 präzise aufgerastet werden kann. Im in Fig. 1 dargestellten Ausführungsbeispiel fixiert dabei die Kappe 8 gleichzeitig elastisch auch die Armaturenhülse 4 in axialer Richtung.

Montagetechnisch ist es zweckmäßig, daß die Ausnehmungen 26 an der der Ventileinheit 6 zugewandten Oberseite des Armaturenkörpers 2 angeordnet sind und die Lappen 25 in den Ausnehmungen 26 durch die aufgesetzte und mit dem Armaturenkörper 2 verbundene Ventileinheit 6 fixiert sind. Konstruktiv möglich, wenn auch montagetechnisch weniger zweckmäßig, wäre auch eine umgekehrte Zuordnung.

Eine in der Zeichnung nicht dargestellte Alternative unter Nutzung der Befestigungsschrauben 7 besteht darin, daß jedenfalls an den für die Befestigungsschrauben 7 vorgesehenen Positionen Lappen mit Durchgangsbohrungen für die Befestigungsschrauben 7 angeordnet sind.

Insgesamt liegt mit der erfindungsgemäßen Sanitärarmatur eine konstruktiv verbesserte, weitgehend verschleißarme Sanitärarmatur mit schwenkbarem Auslaufarm vor.

## Patentansprüche

1. Sanitärarmatur mit einem ortsfest anbringbaren, zylindrischen Armaturenkörper (2) mit Zu- und Ablaufkanälen und einem Ausströmkanal (3), mit einer auf den Armaturenkörper (2) aufgeschobenen zylindrischen Armaturenhülse (4) mit seitlich angeschlossenem Schwenkarm (5) mit Auslaufmundstück, mit einer auf dem Armaturenkörper (2) angebrachten Ventileinheit (6) und mit einer die Ventileinheit (6) überfassenden, an die Armaturenhülse (4) anschließenden Kappe (8), wobei zwischen dem Armaturenkörper (2) und der Armaturenhülse (4) einerseits Dichtringe (10) im Bereich des Ausströmkanals (3), andererseits ein unterer und ein oberer Lagerring (11, 12) angeordnet sind, wobei die Lagerringe (11, 12) vorzugsweise aus Kunststoff, insbesondere aus einem gleitfähigen verschleißarmen Kunststoff bestehen und wobei der untere Lagerring (11) im Querschnitt L-förmig mit einem zylindermantelförmigen, ein Radiallager bildenden Abschnitt (13) und einem flanschartig abragenden, ein Axiallager bildenden Abschnitt (14) ausgeführt ist und der obere Lagerring (12) ebenfalls einen zylindermantelförmigen, ein Radiallager bildenden Abschnitt (16) aufweist, **dadurch gekennzeichnet,** daß der obere Lagerring (12) im zylindermantelförmigen Abschnitt (1b) durchgehend ausgeführt ist und mit einem Überstandsabschnitt (23) nach oben über die Armaturenhülse (4) hinausragt und der Überstandsabschnitt (23) radial abragende Rastnasen (24) zum Aufrasten der Kappe (8) aufweist.

2. Sanitärarmatur nach Anspruch 1, dadurch gekennzeichnet, daß der untere Lagerring (11) im zylindermantelförmigen Abschnitt (13) durchgehend ausgeführt ist.

3. Sanitärarmatur nach Anspruch 1 oder 2, dadurch gekennzeichnet, daß der untere Lagerring (11) im flanschartig abragenden Abschnitt (14) auf dem Umfang verteilt mehrere radial verlaufende Schlitze (19) aufweist.

4. Sanitärarmatur nach Anspruch 1 oder 3, dadurch gekennzeichnet, daß der untere Lagerring (11) mit einem radial verlaufenden, durch den zylindermantelförmigen Abschnitt (13) und durch den flanschartig abragenden Abschnitt (14) gehenden Einbauschlitz (20) versehen ist.

5. Sanitärarmatur nach einem der Ansprüche 1 bis 4, dadurch gekennzeichnet, daß der obere Lagerring (12) mit einem Stirnrand (21) des zylindermantelförmigen Abschnittes (16) einer Ringfläche (22) an der Armaturenhülse (4) mit Spiel gegenübersteht.

6. Sanitärarmatur nach einem der Ansprüche 1 bis 5, dadurch gekennzeichnet, daß der Überstandsabschnitt (23) einen größeren Außendurchmesser als der zylindermantelförmige Abschnitt (16) aufweist und vorzugsweise der zylindermantelförmige Abschnitt (16) und der Überstandsabschnitt (23) im Querschnitt S-förmig ineinander übergehen.

7. Sanitärarmatur nach einem der Ansprüche 1 bis 6, dadurch gekennzeichnet, daß die Wandstärke des oberen Lagerringes (12) im Überstandsabschnitt (23) geringer ist als im zylindermantelförmigen Abschnitt (16).

8. Sanitärarmatur nach einem der Ansprüche 1 bis 7, dadurch gekennzeichnet, daß der obere Lagerring (12) am unteren Ende des Überstandsabschnittes (23) einen radial nach außen abragenden Flansch aufweist, der in den Zwischenraum zwischen der Armaturenhülse (4) und der Kappe (8) ragt und dessen Außenrand mit den Außenflächen der Armaturenhülse (4) und der Kappe (8) fluchtet.

9. Sanitärarmatur nach einem der Ansprüche 1 bis 8, dadurch gekennzeichnet, daß der zylindermantelförmige Abschnitt (16) des oberen Lagerringes (12) die Ventileinheit (6) umgibt und am Innenumfang nach innen abragende Lappen (25) aufweist und im Armaturenkörper (2) und/oder in der Ventileinheit (6) zu den Lappen (25) passende Ausnehmungen (26) vorgesehen sind.

10. Sanitärarmatur nach Anspruch 9, dadurch gekennzeichnet, daß die Ausnehmungen (26) an der der Ventileinheit (6) zugewandten Oberseite des Armaturenkörpers (2) angeordnet sind und die Lappen (25) in den Ausnehmungen (26) durch die aufgesetzte und mit dem Armaturenkörper (2) verbundene Ventileinheit (6) fixiert sind.

11. Sanitärarmatur nach Anspruch 9 oder 10, wobei die Ventileinheit (6) mit dem Armaturenkörper (2) verschraubt ist, dadurch gekennzeichnet, daß jedenfalls an den für die Befestigungsschrauben (7) vorgesehenen Positionen Lappen (25) mit Durchgangsbohrungen für die Befestigungsschrauben (7) angeordnet sind.

## Claims

1. A sanitary fitting with a cylindrical fitting body (2) which can be mounted in a fixed position and with supply and outlet channels and a discharge channel (3), with a cylindrical fitting sleeve (4) slid on to the fitting body (2) with a laterally attached swivelling arm (5) with a discharge nozzle, with a valve unit (6) provided on the fitting body (2) and with a cap (8) engaging above the valve unit (6) and attached to the fitting sleeve (4), wherein firstly sealing rings (10) in the region of the discharge channel (3) and secondly a lower and an upper bearing ring (11, 12) are disposed between the fitting body (2) and the fitting sleeve (4), wherein the bearing rings (11, 12) preferably consist of plastic, most preferably of a low-wear plastic with a sliding capacity, and wherein the lower bearing ring (11) is constructed with an L-shaped cross-section with a section (13) in the form of a cylindrical shell forming a radial bearing and a projecting flange-like section (14) forming an axial bearing, and the upper bearing ring (12) likewise has a section (16) in the form of a cylindrical shell forming a radial bearing, characterised in that the upper bearing ring (12) is of continuous construction in its section (16) in the form of a cylindrical shell and projects upwards with a projecting section (23) above the fitting sleeve (4) and the projecting section (23) has radially projecting catch projections (24) for locking the cap (8).

2. A sanitary fitting according to claim 1, characterised in that the lower bearing ring (11) is of continuous construction in its section (13) in the form of a cylindrical shell.

3. A sanitary fitting according to claim 1 or 2, characterised in that the lower bearing ring (11) has a plurality of radially extending slots (19) distributed along the periphery in its flange-like projecting section (14).

4. A sanitary fitting according to claim 1 or 3, characterised in that the lower bearing ring (11) is provided with a radially extending installation slot (20) passing through the section (13) forming a cylindrical shell and through the flange-like projecting section (14).

5. A sanitary fitting according to any one of claims 1 to 4, characterised in that an end edge (21) of the section (16) in the form of a cylindrical shell of the upper bearing ring (12) is situated, with a clearance, facing an annular face (22) on the fitting sleeve (4).

6. A sanitary fitting according to any one of claims 1 to 5, characterised in that the projection section (23) has a larger outside diameter than the section (16) in the form of a cylindrical shell and the section (16) in the form of a cylindrical shell and the projection section (23) preferably extend into each other with an S-shaped cross-section.

7. A sanitary fitting according to any one of claims 1 to 6, characterised in that the wall thickness of the upper bearing ring (12) in the projection section (23) is less than that in the section (16) in the form of a cylindrical shell.

8. A sanitary fitting according to any one of claims 1 to 7, characterised in that the upper bearing ring (12) has a radially outwardly projecting flange at the lower end of the projection section (23), which flange projects into the intermediate space between the fitting sleeve (4) and the cap (8) and the outer edge of which is aligned with the outer faces of the fitting sleeve (4) and the cap (8).

9. A sanitary fitting according to any one of claims 1 to 8, characterised in that the section (16) in the form of a cylindrical shell of the upper bearing ring (12) surrounds the valve unit (6) and has inwardly projecting tabs (25) on its inner periphery, and recesses (26) matched to the tabs (25) are provided in the fitting body (2) and/or in the valve unit (6).

10. A sanitary fitting according to claim 9, characterised in that the recesses (26) are disposed on the upper face of the fitting body (2) facing the valve unit (6) and the tabs (25) are fixed in the recesses (26) by the fitted valve unit (6) which is attached to the fitting body (2).

11. A sanitary fitting according to claim 9 or 10, wherein the valve unit (6) is screwed to the fitting body (2), characterised in that tabs (25) with through-holes for the fastening screws (7) are in each case disposed at the positions provided for the fastening screws (7).

## Revendications

1. Robinet sanitaire comportant un corps cylindrique (2) prévu pour être monté à poste fixe et dans lequel sont ménagés des canaux d'arrivée et de départ et un canal d'écoulement (3), et une douille cylindrique (4) enfilée sur le corps (2) du robinet et pourvue d'un bras orientable (5) raccordé latéralement à la douille et muni d'un bec d'écoulement, un bloc (6) des organes d'obturation du robinet monté sur le corps (2) de celui-ci, et un chapeau (8) qui coiffe le bloc (6) des organes d'obturation et se raccorde à la douille (4) du robinet, des joints annulaires d'étanchéité (10) étant prévus entre le corps (2) du robinet et la douille (4) de celui-ci, à l'endroit du canal d'écoulement (3), ainsi qu'une bague de portage inférieure (11) et une bague de portage supérieure (12) montées entre le corps (2) et la douille (4), ces bagues de portage (11,12)étant confectionnées de préférence en matière plastique, en particulier en une matière plastique favorable au glissement et sujette à une faible usure, et la bague de portage inférieure (11) présentant en section transversale un profil en L, avec une partie en forme d'enveloppe cylindrique (13) constituant un palier radial et une autre partie en forme de collerette en saillie (14) constituant un palier axial, tandis que la bague de portage supérieure (12) comporte également une partie en forme d'enveloppe cylindrique (16) constituant un palier radial, caractérisé en ce que la bague de portage supérieure (12) présente une structure continue à l'endroit de sa partie en forme d'enveloppe cylindrique (16), et comporte un prolongement (23) qui déborde vers le haut au-delà de la douille (4) du robinet, ce prolongement (23) étant pourvu de becs d'encliquetage (24) en saillie dans le sens radial pour recevoir et fixer par encliquetage le chapeau (8).

2. Robinet sanitaire selon la revendication 1, caractérisé en ce que la bague de portage inférieure (11) présente une structure continue à l'endroit de sa partie en forme d'enveloppe cylindrique (13).

3. Robinet sanitaire selon la revendication 1 ou 2, caractérisé en ce que la bague de portage inférieure (11), à l'endroit de sa partie formant une collerette en saillie (14), présente plusieurs fentes radiales (19) réparties sur le pourtour de la bague.

4. Robinet sanitaire selon la revendication 1 ou 3, caractérisé en ce que la bague de portage inférieure (11) est pourvue d'une fente radiale de montage (20) qui coupe la partie en forme d'enveloppe cylindrique (13) et la partie en forme de collerette en saillie (14).

5. Robinet sanitaire selon l'une des revendications 1 à 4, caractérisé en ce qu'il existe un jeu à l'endroit d'un bord terminal (21) de la partie en forme d'enveloppe cylindrique (16) de la bague de portage supérieure (12), en regard d'une face annulaire (22) de la douille (4) du robinet.

6. Robinet sanitaire selon l'une des revendications 1 à 5, caractérisé en ce que le prolongement (23) présente un diamètre extérieur supérieur à celui de la partie en forme d'enveloppe cylindrique (16), le prolongement (23) se raccordant de préférence à la partie en forme d'enveloppe cylindrique (16) par une partie qui présente un profil en S en section transversale.

7. Robinet sanitaire selon l'une des revendications 1 à 6, caractérisé en ce que l'épaisseur de la paroi de la bague de portage supérieure (12), à l'endroit du prolongement (23), est plus faible que dans sa partie en forme d'enveloppe cylindrique (16).

8. Robinet sanitaire selon l'une des revendications 1 à 7, caractérisé en ce que la bague de portage supérieure (12), à l'endroit de l'extrémité inférieure du prolongement (23), présente une collerette en saillie radiale vers l'extérieur qui pénètre dans l'interstice ménagé entre la douille (4) du robinet et le chapeau (8) et dont le bord externe affleure les faces extérieures de la douille (4) du robinet et du chapeau (8).

9. Robinet sanitaire selon l'une des revendications 1 à 8, caractérisé en ce que la partie en forme d'enveloppe cylindrique (16) de la bague de portage supérieure (12) entoure le bloc (6) des organes d'obturation et présente sur son pourtour interne des languettes (25) en saillie vers l'intérieur, des évidements (26) adaptés à recevoir ces languettes (25) étant prévus dans le corps (2) du robinet et/ou dans le bloc (6) des organes d'obturation.

10. Robinet sanitaire selon la revendication 9, caractérisé en ce que les évidements (26) sont disposés sur la face supérieure du corps (2) du robinet en regard du bloc (6) des organes d'obturation, les pattes (25) étant fixées dans les évidements (26) par le bloc (6) des organes d'obturation mis en place et relié au corps (2) du robinet.

11. Robinet sanitaire selon la revendication 9 ou 10, dans lequel le bloc (6) des organes d'obturation est fixé par des vis au corps (2) du robinet, caractérisé en ce qu'il comporte, en chacun des endroits prévus pour le montage des vis de fixation (7), des pattes (25) ayant des trous de passage pour les vis de fixation (7).
